(19) Europäisches Patentamt
European Patent Office
Office européen des brevets

(11) Veröffentlichungsnummer: **0 063 723**
**B1**

(12) # EUROPÄISCHE PATENTSCHRIFT

(45) Veröffentlichungstag der Patentschrift: **03.07.85**

(51) Int. Cl.⁴: **C 08 G 69/44**

(21) Anmeldenummer: **82102932.9**

(22) Anmeldetag: **06.04.82**

(54) **Polyesteramide und deren Verwendung zum Verkleben von organischen und anorganischen Substraten und als Vergussmassen.**

(30) Priorität: **24.04.81 DE 3116349**

(43) Veröffentlichungstag der Anmeldung: **03.11.82 Patentblatt 82/44**

(45) Bekanntmachung des Hinweises auf die Patenterteilung: **03.07.85 Patentblatt 85/27**

(84) Benannte Vertragsstaaten: **AT BE DE FR GB IT LU NL SE**

(56) Entgegenhaltungen:
**DE - A - 1 500 002**
**DE - A - 1 719 192**
**GB - A - 571 017**

**Die Akte enthält technische Angaben, die nach dem Eingang der Anmeldung eingereicht wurden und die nicht in dieser Patentschrift enthalten sind.**

(73) Patentinhaber: **SCHERING AKTIENGESELLSCHAFT Berlin und Bergkamen, Waldstrasse 14 Postfach 15 40, D-4709 Bergkamen (DE)**

(72) Erfinder: **Drawert, Manfred, Dr. Dipl.-Chem., Alte Kreisstrasse 13, D-5758 Fröndenberg (DE)**
Erfinder: **Imöhl, Wolfgang, Dr. Dipl.-Chem., Bergpfad 43, D-4750 Unna (DE)**

**EP 0 063 723 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung sind Polyesteramide, hergestellt durch Kondensation von dimerisierten Fettsäuren mit Äthylendiamin und aliphatischen Codiaminen, Diglykolamin® (Diglykolamin ist ein eingetragenes Warenzeichen der Firmal Jefferson Chemical Co., Inc. für 2-(2-Aminoethoxy)ethanol; vgl. «The Condensed Chemical Dictionary», 8. Ausgabe, van Nostrand Reinhold Company 1971, Seiten 300, 961 und 967) und gegebenenfalls Codicarbonsäuren und deren Verwendung, gegebenenfalls mit üblichen Zusatzstoffen und Füllstoffen und/oder Äthylenvinylacetatcopolymeren, zum Verkleben von organischen und anorganischen Substraten untereinander oder miteinander und als Vergussmassen.

Polyamidharze, die durch Polykondensation von dimerisierten Fettsäuren mit Polyaminen hergestellt werden, finden bereits seit langer Zeit ebenso wie durch die Mitverwendung von Hydroxylgruppen enthaltenden Komponenten hergestellten Polyesteramide Verwendung als Schmelzklebstoffe zur Verklebung von anorganischen und organischen Substraten.

Diese Produkte entsprechen jedoch in manchen Anwendungsbereichen noch nicht den gestiegenen Forderungen der Praxis.

Aus der DE-AS-1-520-002 sind Polyesteramide aus dimerisierten Fettsäuren einer genau definierten Zusammensetzung, einer Dicarbonsäure, einem Diamin und Alkanolamin der allgemeinen Formel $H_2N-R'''-OH$, in welcher R''' ein aliphatischer Kohlenwasserstoffrest ist, bekannt. Diese Produkte sollen in Kombination mit guter Schlagfestigkeit eine höhere Abschälfestigkeit an Metallen aufweisen.

Diese Produkte zeiten zwar bei Raumtemperatur eine recht gute Flexibilität, die jedoch für bestimmte Anwendungen, insbesondere bei niedrigen Temperaturen um oder unter 0°C nicht voll befriedigt.

Weiterhin zeigen diese Produkte keine Verträglichkeit mit Äthylen-Vinylacetat-Copolymeren (EVA).

Um den vielfältigen Anforderungen der Anwender von Schmelzklebstoffen entsprechen zu können, ist es in vielen Fällen notwendig, die reinen Polyamid- oder Polyesteramid-Harze mit anderen thermoplastischen Komponenten abzumischen.

Insbesondere zur Herstellung von Schmelzklebstoffen mit speziellen Eigenschaften wird häufig eine Abmischung der Harze mit Äthylen-Vinylacetat-Copolymeren gewünscht. Grundvoraussetzung für solche Formulierungen ist, dass die zu mischenden Stoffe verträglich sind und auch beim Abkühlen der Schmelze keine Entmischungserscheinungen zeigen.

Die bisher bekannten Polyamid- und Polyesteramid-Harze zeigen allgemein eine schlechte Verträglichkeit mit Äthylen-Vinylacetat-Copolymeren. Lediglich EVA-Copolymere mit einem sehr hohen Vinylacetatanteil von 35-40% lassen sich in kleinen Anteilen den Polyamidharzen zumischen.

Vermischt man dagegen die bisher beschriebenen und im Handel befindlichen Polyesteramid-Harze mit den EVA-Typen, die einen niedrigeren Vinylacetatanteil besitzen, so muss man feststellen, dass insbesondere in der erstarrten Schmelze Inhomogenitäten auftreten. Am leichtesten lässt sich diese Inhomogenität durch Knicken einer 3-5 mm starken Folie erkennen. Bei einer Unverträglichkeit der Harze mit EVA treten an der Knickstelle starke milchige Eintrübungen auf.

Aufgabe der vorliegenden Erfindung ist es, die genannten Nachteile des Standes der Technik zu überwinden.

Diese Aufgabe wird erfindungsgemäss gelöst durch Polyesteramide, welche hergestellt werden durch Kondensation von

A) dimerisierten Fettsäuren mit 16-44 Kohlenstoffatomen mit
B) Äthylendiamin und
C) mindestens einem Diamin der allgemeinen Formel I

$$H_2N\text{-}R\text{-}NH_2 \qquad I$$

in welcher R ein aliphatischer, gegebenenfalls substituierter Kohlenwasserstoffrest mit 3-36 C-Atomen, der gegebenenfalls durch Heteroatome unterbrochen sein kann, sein kann und mit

D) Diglykolamin® und gegebenenfalls mit
E) mindestens einer der Dicarbonsäuren der allgemeinen Formel II

$$R^2OOC\text{-}R^1\text{-}COOR^2 \qquad II$$

in welcher $R^1$ ein aliphatischer, cycloaliphatischer, aromatischer, araliphatischer Kohlenwasserstoffrest mit 4-12 C-Atomen und $R^2$ Wasserstoff oder ein Alkylrest mit 1-8 C-Atomen sein kann.

Die erfindungsgemässen Polyesteramide können je nach Erfordernis übliche Zusatzstoffe und Füllstoffe enthalten, z.B. anorganische Füllstoffe, Pigmente und Farbstoffe, Antioxydantien, UV-Absorber, optische Aufheller, Antistatika, Flammschutzmittel und Weichmacher.

Ein weiterer Gegenstand der Erfindung ist die Verwendung der erfindungsgemässen Polyesteramide als Vergussmassen oder zur Verklebung von organischen und anorganischen Substratarten miteinander oder untereinander.

Ein weiterer Gegenstand der Erfindung sind Mischungen der erfindungsgemässen Polyesteramide mit EVA-Copolymeren sowie deren Verwendung zur Verklebung von organischen oder anorganischen Substraten miteinander oder untereinander und als Vergussmassen.

Die erfindungsgemäss mitverwendeten dimerisierten Fettsäuren haben Dimergehalte zwischen 55 bis 100%, vorzugsweise 70-96%.

Der Ausdruck dimerisierte Fettsäure bezieht sich in allgemeiner Form auf polymerisierte Säuren, die aus «Fettsäuren» erhalten werden. Der Ausdruck «Fettsäure» umfasst ungesättigte natürliche und synthetische einbasische aliphatische Säuren mit 8-22 Kohlenstoffatomen, bevorzugt 18 Kohlenstoffatomen. Diese Fettsäuren lassen sich nach bekannten Verfahren polymerisieren (vgl. DE-OS 1 443 938, DE-OS 1 443 968, DE-PS 2 118 702 und DE-PS 1 280 852).

Typische im Handel erhältliche polymere Fettsäuren haben etwa die folgende Zusammensetzung:

| | | |
|---|---|---|
| monomere Säuren | (Mo) | 5 bis 15 Gew.-% |
| dimere Säuren | (Di) | 55 bis 80 Gew.-% |
| trimere Säuren | (Tri) | 10 bis 35 Gew.-% |

Der Gehalt an dimerer Säure kann durch allgemein bekannte Destillationsverfahren bis zu 100 Gew.-% erhöht werden.

Die eingesetzte dimere Fettsäure kann auch in hydrierter Form vorliegen.

Bei Verwendung von destillierter dimerer Fettsäure werden Schmelzkleber mit verbesserter Farbzahl erhalten. Andererseits ist die Verwendung von handelsüblicher technischer polymerisierter Fettsäure zur Herstellung von Schmelzklebern für besondere Zwecke möglich. Bei der Verwendung von technischer dimerer Fettsäure sei nur darauf hingewiesen, dass der Gehalt an trimerer Fettsäure eine maximale Grenze nicht überschreiten sollte. Dieser Grenzwert hängt von dem jeweiligen Gehalt an dimerer und monomerer Fettsäure der polymerisierten Fettsäure ab und kann durch einen orientierenden Versuch, wie er auch zur handwerklichen Alltagsroutine des Durchschnittsfachmanns gehört, festgestellt werden.

Bevorzugt wird jedoch destillierte dimere Fettsäure mit einem Gehalt an dimerer Fettsäure von 70 bis 96% verwendet.

Der gegebenenfalls bereits vorhandene Anteil an Monocarbonsäuren in der dimerisierten Fettsäure kann zur Einstellung eines gewünschten Molekulargewichtes durch Zusatz weiterer Monocarbonsäuren noch erhöht werden. Als erfindungsgemäss mitverwendbare Monocarbonsäuren kommen insbesondere geradkettige oder verzweigte, gesättigte oder ungesättigte Monocarbonsäuren mit 2-22 Kohlenstoffatomen in Betracht, wie z.B. Essigsäure, Propionsäure, Buttersäure, Valeriansäure, Laurinsäure, Palmitinsäure, Palmitoleinsäure, Erucasäure. Erfindungsgemäss bevorzugt werden die $C_{18}$-Monocarbonsäuren wie Stearinsäure, Ölsäure, Linolsäure, Linolensäure und die natürlichen Fettsäuregemische wie z.B. Tallölfettsäure oder Sojaölfettsäure.

Als erfindungsgemäss mitzuverwendende Co-Diamine kommen Diamine der allgemeinen Formel (I)

$$H_2\text{-}N\text{-}R\text{-}NH_2 \qquad I$$

in welcher R ein aliphatischer Kohlenwasserstoffrest mit 3 bis 6, insbesondere 6 bis 20, und 36 Kohlenstoffatomen, der gegebenenfalls durch Heteroatome, wie insbesondere Sauerstoff, unterbrochen ist, in Betracht, wie z.B. 1,6-Diaminohexan, 1,9-Diaminononan, 1,12-Diaminododecan, 1,13-Diaminotridecan, Dimerfettsäurediamin (hergestellt durch bekannte Verfahren aus dimeren Fettsäuren); 1,7-Diamino-4-oxa-heptan, 1,7-Diamino-3,5-dioxa-heptan, 1,10-Diamino-4,7-dioxa-decan, 1,10-Diamino-4,7-dioxa-5-methyldecan, 1,11-Diamino-6-oxa-undecan, 1,11-Diamino-4,8-dioxa-undecan, 1,11-Diamino-4,8-dioxa-5-methyl-undecan, 1,11-Diamino-4,8-dioxa-5,6-dimethyl-7-propionyl-undecan, 1,12-Diamino-4,9-dioxa-docecan, 1,13-Diamino-4,10-dioxa-tridecan, 1,13-Diamino-4,7,10-trioxa-5,8-dimethyl-tridecan, 1,14-Diamino-4,11-dioxa-tetradecan, 1,14-Diamino-4,7,10-trioxa-tetradecan, 1,16-Diamino-4,7,10,13-tetraoxa-hexadecan, 1,20-Diamino-4,17-dioxa-eicosan.

Das Äquivalenzverhältnis von Äthylendiamin zum Codiamin kann bei einem Diglykolaminanteil von 0,7 Äquivalenten zwischen 0,05 : 0,25 und 0,25 : 0,05 und bei einem Diglykolaminanteil von 0,1 Äquivalenten zwischen 0,1 : 0,8 und 0,8 : 0,1 liegen.

Erfindungsgemäss wird neben den Diaminkomponenten Diglykolamin® eingesetzt. Das Verhältnis der Amine zu Diglykolamin® wird im wesentlichen durch den gewünschten Flexibilitätsgrad sowohl bei tiefen als auch bei hohen Temperaturen, aber auch durch die Haftung an den jeweiligen Substraten bestimmt. Weiterhin beeinflussen Art und Menge der mitverwendeten Säuren das Verhältnis.

Das Äquivalenzverhältnis der Summe der Diaminkomponenten [Komponente B) + C)] zu dem Diglykolamin® [Komponente D)] kann im Bereich von 0,3 zu 0,7 bis 0,9 : 0,1 gewählt werden, bevorzugt ist ein Äquivalenzverhältnis im Bereich von 0,5 : 0,5 bis 0,8 zu 0,2, wobei die Summe der Amin- und Hydroxyläquivalente den Carboxyläquivalenten entspricht.

Es wurde gefunden, dass die erfindungsgemässen Polyesteramidharze eine überraschend gute Verträglichkeit mit EVA-Copolymeren aufweisen, insbesondere dann, wenn der Co-Dicarbonsäureanteil im Polyesteramid möglichst niedrig, vorzugsweise unter 0,3 Äquivalenten, bezogen auf Gesamtsäureäquivalent, liegt. In der Polyesteramid/EVA-Copolymer-Mischung können, je nach verwendetem Polyesteramid-Typ bzw. EVA-Copolymer-Typ, mehr als 50% EVA-Copolymere enthalten sein.

Die Mischung selbst wird bevorzugt in speziellen Apparaturen, wie z.B. Knetern oder Extrudern vorgenommen. Bei den erfindungsgemässen Polyesteramiden kann die Vermischung jedoch auch durch intensives Rühren der aufgeschmolzenen Komponenten vorgenommen werden.

Sowohl in der Hitze als auch in der Kälte zeigen die aus den erfindungsgemässen Polyamidharzen und EVA-Copolymeren hergestellten Abmischungen keinerlei Entmischungserscheinungen. Auch beim oben beschriebenen «Knick-Test» sind keine Unverträglichkeiten zu beobachten (vgl. Tabelle 2).

Weiterhin zeichnen sich die erfindungsgemässen Polyesteramide gegenüber bekannten Systemen durch bessere Flexibilitäten, auch bei Tieftemperaturen, aus und weisen darüber hinaus eine hervorragende Resistenz gegenüber Schlagbeanspruchung sowie gute Klebwerte an den verschiedensten Substraten auf. Diese guten Eigenschaften bleiben auch bei relativ niedrigen Schmelzviskositäten erhalten.

Wie aus der Tabelle 3 ersichtlich, zeigen die erfindungsgemässen Polyamidharze bei —20°C sehr hohe Dehnungen. Bei den bisher bekannten Polyamidharzen auf Basis dimerer Fettsäuren lassen sich bei Mitverwendung von teuren Codiaminen, wie z.B. Dipiperidylpropan, bei —20°C Dehnungswerte von max. 200% erreichen. Die normalen Polyamidharze zeigen dagegen bei Minus-Temperaturen wesentlich niedrigere Werte.

Neben Polyäthylen, Blei und Aluminium können die folgenden Substrate miteinander oder untereinander verklebt werden: Leder, Gummi, Textilien, Holz, Papier, PVC, Polyolefine, Polyester, Keramik, Glas, die in der Technik gebräuchlichen Eisen- und Nichteisenmetalle wie Stahl, Kupfer, Zink, Zinn oder deren Legierungen.

Bei den besonders schwierig zu verklebenden Polyestern wird der Diglykolaminanteil der erfindungsgemässen Polyesteramide vorteilhafterweise auf oder über ca. 0,5 Äquivalente angehoben.

Die erfindungsgemäss gegebenenfalls mitverwendbaren Dicarbonsäuren fallen unter die allgemeine Formel (II)

$$R^2OOC\text{-}R^1\text{-}COOR^2 \qquad II$$

in welcher $R^1$ ein gegebenenfalls substituierter aliphatischer, cycloaliphatischer, aromatischer oder araliphatischer Kohlenwasserstoffrest mit 4-12 Kohlenstoffatomen und $R^2$ Wasserstoff oder ein Alkylrest mit 1-8 Kohlenstoffatomen sein kann.

Diese Codicarbonsäuren können in Mengen von bis zu 0,9 Äquivalenten, bezogen auf die dimerisierte Fettsäure, eingesetzt werden.

Als Beispiele seinen genannt: Adipinsäure, Pimelinsäure, Korksäure, Azelainsäure, Sebazinsäure, Decandicarbonsäure, Brassylsäure, 1,4-Cyclohexandicarbonsäure, Terephthalsäure, Isophthalsäure, Naphthalindicarbonsäure, 1,4-Phenylendiessigsäure, Azelainsäure, Sebazinsäure und Terephthalsäure werden erfindungsgemäss bevorzugt.

Die Summe der molaren Äquivalente der zur Anwendung kommenden Amin- und Hydroxylgruppen der Komponenten B), C) und D) ist vorzugsweise praktisch gleich den molaren Äquivalenten der Carboxylgruppen der Komponenten A) und E).

Die Kondensation der beschriebenen Komponenten zu den erfindungsgemässen Polyesteramiden erfolgt bei Temperaturen zwischen 200 und 300°C in der üblichen Weise.

Die in den nachfolgenden Beispielen verwendeten dimeren Fettsäuren haben die folgende Zusammensetzung (nach GLC).

| | | |
|---|---|---|
| Beispiele 1 - 3, 5 - 9 | polymerisierte Tallölfettsäure | |
| | monomere Fettsäure | 0,5% |
| | dimere Fettsäure | 96,5% |
| | trimere und höherpolymere Fettsäure | 3,0% |
| Beispiel 4 | polymerisierte Ölsäure | |
| | monomere Fettsäure | 5,6% |
| | dimere Fettsäure | 79,1% |
| | trimere und höherpolymere Fettsäure | 15,3% |

Als EVA-Komponente wurde ELVAX® 260 (Handelsprodukt der Firma Du Pont) mit einem Vinylacetatanteil von ca. 28% ELVAX® 420 mit einem Vinylacetatanteil von ca. 18% und ELVAX® 40 mit einem Vinylacetatanteil von etwa 40% eingesetzt.

*Beispiele der erfindungsgemässen Polyesteramide*

*Beispiel 1*

Ein mit Thermomether, Stickstoffeinlass, Rührer und Kühler mit Vorlage ausgerüsteter 1-l-Dreihalskolben wurde mit 400 g destillierter dimerer Tallölfettsäure, 4 g Antioxydant »Naugard® 445« (Naugard ist ein eingetragenes Warenzeichen der Firma Uniroyal, Naugatuck, Connecticut, USA für 4,4'-Bis-($\alpha$,$\alpha$-dimethylbenzyl)-diphenylamin), 0,1 g Phosphorsäure (85%ig), 21,13 g Äthylendiamin (0,5 Äquivalente), 8,17 g Hexamethylendiamin (0,1 Äquivalent) und 30,15 g Diglykolamin (0,4 Äquivalente) beschickt.

Nach Verdrängen der Luft durch Stickstoff wurde das Reaktionsgemisch in 90 Min. auf 250°C unter Rühren und unter Stickstoff aufgeheizt und 6 Std. bei dieser Temperatur belassen. Während der letzten 4 Std. wurde ein Vakuum von 15 mbar angelegt.

Das erhaltene Produkt zeigte folgende Kennzahlen:

| | |
|---|---|
| R+B-Erweichungspunkt: | 82°C |
| Schmelzviskosität: | 3,4 Pa · s bei 200°C |
| Aminzahl: | 1,0 |
| Säurezahl: | 5,1 |

Die in der Tabelle 1 aufgeführten Produkte wurden in analoger Weise hergestellt.

Tabelle 1

| Beispiel | A | E | Äquivalenz-verhältnis A : E | B Äthylendiamin |
|---|---|---|---|---|
| 2 | 400,00 g dimerisierte Tallölfettsäure | — | 1 : 0 | 21,13 g |
| 3 | 400,00 g dimerisierte Tallölfettsäure | — | 1 : 0 | 21,13 g |
| 4 | 340,20 g dimerisierte Ölsäure<br>19,80 g Tallölfettsäure | 18,90 g Dimethyl-therephthalat | 0,87 : 0,13 | 21,94 g |
| 5 | 360,00 g dimerisierte Tallölfettsäure | 29,95 g Azelainsäure | 0,8 : 0,2 | 23,77 g |
| 6 | 360,00 g dimerisierte Tallölfettsäure | 29,95 g Azelainsäure | 0,8 : 0,2 | 23,77 g |
| 7 | 400,00 g dimerisierte Tallölfettsäure | — | 1 : 0 | 33,80 g |
| 8 | 266,00 g dimerisierte Tallölfettsäure<br>14,00 g Tallölfettsäure | 93,18 g Azelainsäure | 0,5 : 0,5 | 29,58 g |
| 9 | 266,00 g dimerisierte Tallölfettsäure<br>14,00 g Tallölfettsäure | 93,18 g Azelainsäure | 0,5 : 0,5 | 29,58 g |

Tabelle 1 (Fortsetzung)

| Beispiel | C | D Diglycolamin | Äquivalenzverhältnis B : C : D | AZ[1] | SZ[2] | R + B[3] °C | Viskosität bei 200°C Pa . s |
|---|---|---|---|---|---|---|---|
| 2 | 16,33 g 1,6-Diaminohexan | 22,69 g | 0,5 : 0,2 : 0,3 | 1,4 | 4,9 | 84 | 5,3 |
| 3 | 24,49 g 1,6-Diaminohexan | 15,12 g | 0,5 : 0,3 : 0,2 | 0,9 | 4,7 | 85 | 6,2 |
| 4 | 25,45 g 1,6-Diaminohexan | 15,71 g | 0,5 : 0,3 : 0,2 | 2,1 | 6,3 | 171 | 5,0 |
| 5 | 9,18 g 1,6-Diaminohexan | 34,03 g | 0,5 : 0,1 : 0,4 | 2,1 | 5,5 | 107 | 3,1 |
| 6 | 31,11 g 1,12-Diamino-4,9-dioxa-dodecan | 25,52 g | 0,5 : 0,2 : 0,3 | 1,3 | 5,9 | 101 | 2,6 |
| 7 | 46,35 g Dimerfettsäurediamin | 7,56 g | 0,8 : 0,1 : 0,1 | 1,2 | 5,0 | 109 | 9,2 |
| 8 | 38,71 g 1,12-Diamino-4,9-dioxa-dodecan | 31,76 g | 0,5 : 0,2 : 0,3 | 1,4 | 7,5 | 156 | 2,8 |
| 9 | 109,77 g Dimerfettsäurediamin | 31,76 g | 0,5 : 0,2 : 0,3 | 1,4 | 5,5 | 159 | 1,6 |

1) Aminzahl
2) Säurezahl
3) Ring + Ball-Erweichungspunkt, gemessen nach DIN 1995

Tabelle 2

| Mischung aus | Verträglichkeit geprüft im Knicktest |
|---|---|
| Erfindungsgem. Harze gemäss | |
| 50 Tl Beisp. 1, Tab. 1 und 50 Tl ELVAX® 260 | + |
| 50 Tl Beisp. 3, Tab. 1 und 50 Tl ELVAX® 260 | + |
| 50 Tl Beisp. 4, Tab. 1 und 50 Tl ELVAX® 260 | + |
| 70 Tl Beisp. 5, Tab. 1 und 30 Tl ELVAX® 40 | + |
| 70 Tl Beisp. 6, Tab. 1 und 30 Tl ELVAX® 40 | + |
| 50 Tl Beisp. 7, Tab. 1 und 50 Tl ELVAX® 260 | + |
| 70 Tl Beisp. 3, Tab. 1 und 30 Tl ELVAX® 420 | + |
| 70 Tl Beisp. 4, Tab. 1 und 30 Tl ELVAX® 420 | + |

Tabelle 2 (Fortsetzung)

| Mischung aus | Verträglichkeit geprüft im Knicktest |
|---|---|
| Polyamidharze *) gemäss dem Stand der Technik (Handelsprodukte) | |
| 50 Tl Polyamidharz A und 50 Tl ELVAX® 260 | — |
| 50 Tl Polyamidharz B und 50 Tl ELVAX® 260 | — |
| 50 Tl Polyamidharz C und 50 Tl ELVAX® 260 | — |
| 70 Tl Polyamidharz A und 30 Tl ELVAX® 420 | — |
| 70 Tl Polyamidharz B und 30 Tl ELVAX® 420 | — |
| 70 Tl Polyamidharz C und 30 Tl ELVAX® 420 | — |

\+ = verträglich
— = unverträglich

Tabelle 2 (Fortsetzung)

*) Kondensationsprodukte aus

| Polyamid-harz | dimere Fetts. | Co-Dicarbonsäure | Amin | Ring- und Kugel-Erweichungspunkt |
|---|---|---|---|---|
| A | + | — | Äthylendiamin | 105 - 115°C |
| B | + | Adipinsäure | Äthylendiamin | 123 - 133°C |
| C | + | Azelainsäure | Äthylendiamin/ Piperazin | 140 - 145°C |
| D | + | Sebazinsäure | Äthylendiamin/ 2,3-Di-(4-piperidyl)-propan | 135 - 145°C |
| F | + | Adipinsäure | Äthylendiamin | 170 - 180°C |

Tabelle 3

| Polyamidharz | Schmelzviskosität bei 200°C | Dehnung **) bei —20°C |
|---|---|---|
| Polyamidharze *) gemäss dem Stand der Technik (Handelsprodukte) | | |
| Polyamidharz A | 0,5 Pa . s | 0% |
| Polyamidharz E | 5,0 Pa . s | 0% |
| Polyamidharz C | 6,0 Pa . s | 130% (1,3 m/m) |
| Polyamidharz D | 15 Pa . s | 200% (2,0 m/m) |
| Erfindungsgemässe Produkte gemäss | | |
| Beisp. 1, Tab. 1 | 3,4 Pa . s | 550% (5,5 m/m) |
| Beisp. 2, Tab. 1 | 5,3 Pa . s | 430 (4,3 m/m) |
| Beisp. 3, Tab. 1 | 6,2 Pa . s | 280% (2,8 m/m) |
| Beisp. 8, Tab. 1 | 2,8 Pa . s | 330% (3,3 m/m) |
| Beisp. 9, Tab. 1 | 1,6 Pa . s | 300% (3,0 m/m) |

**) gemessen nach ASTM D 1708

**Patentansprüche für die Vertragsstaaten:**
BE, DE, FR, GB, IT, LU, NL, SE

1. Polyesteramide, hergestellt durch Kondensation von
A) dimerisierten Fettsäuren mit 16-44 Kohlenstoffatomen mit
B) Äthylendiamin und mit
C) mindestens einem Diamin der allgemeinen Formel I

$$H_2N\text{-}R\text{-}NH_2 \qquad I$$

in welcher R ein aliphatischer, gegebenenfalls substituierter Kohlenwasserstoffrest mit 3-36 C-Atomen, der gegebenenfalls durch Heteroatome unterbrochen sein kann, sein kann und mit
D) Diglykolamin® [= 2-(2-Aminoethoxy)ethanol] und gegebenenfalls mit
E) mindestens einer der Dicarbonsäuren der allgemeinen Formel II

$$R^2OOC\text{-}R^1\text{-}COOR^2 \qquad II$$

in welcher $R^1$ ein aliphatischer, cycloaliphatischer, aromatischer, araliphatischer Kohlenwasserstoffrest mit 4-12 C-Atomen und $R^2$ Wasserstoff oder ein Alkylrest mit 1-8 C-Atomen sein kann.

2. Polyesteramide gemäss Anspruch 1, dadurch gekennzeichnet, dass das Äquivalenzverhältnis der Summe der Aminkomponenten B) und C) zu dem Diglykolamin® D) zwischen 0,3 : 0,7 bis 0,9 : 0,1 liegt und die Summe der Amin- und Hydroxyläquivalente den Carboxyläquivalenten entspricht.

3. Polyesteramide gemäss Anspruch 2, dadurch gekennzeichnet, dass das Äquivalenzverhältnis der Komponente B) zu der Komponente C) bei einem Diglykolaminanteil von 0,7 Äquivalenten zwischen 0,05 : 0,25 und 0,25 : 0,05 und bei einem Diglykolaminanteil von 0,1 Äquivalenten zwischen 0,1 : 0,8 und 0,8 zu 0,1 liegt.

4. Verwendung der Polyesteramide gemäss den Ansprüchen 1 bis 3, gegebenenfalls mit üblichen Zusatzstoffen und Füllstoffen, als Vergussmassen.

5. Verwendung der Polyesteramide gemäss den Ansprüchen 1 bis 3, gegebenenfalls mit üblichen Zusatzstoffen und Füllstoffen, zur Verklebung von organischen und anorganischen Substraten untereinander oder miteinander.

6. Mischungen der Polyesteramide gemäss den Ansprüchen 1 bis 3 mit Äthylen-Vinylacetat-Copolymeren sowie gegebenenfalls üblichen Zusatzstoffen und Füllstoffen.

7. Verwendung der Mischungen gemäss Anspruch 6 zur Verklebung von organischen oder anorganischen Substraten miteinander oder untereinander.

8. Verwendung der Mischungen gemäss Anspruch 6 als Vergussmassen.

**Patentansprüche für den Vertragsstaat:** AT

1. Verfahren zur Herstellung von Polyesteramiden durch Kondensation von
A) dimerisierten Fettsäuren mit 16-44 Kohlenstoffatomen mit
B) Äthylendiamin und mit
C) mindestens einem Diamin der allgemeinen Formel I

$$H_2N\text{-}R\text{-}NH_2 \qquad I$$

in welcher R ein aliphatischer, gegebenenfalls substituierter Kohlenwasserstoffrest mit 3-36 C-Atomen, der gegebenenfalls durch Heteroatome unterbrochen sein kann, sein kann und mit
D) Diglykolamin® [= 2-(2-aminomethoxy)ethanol] und gegebenenfalls mit
E) mindestens einer der Dicarbonsäuren der allgemeinen Formel II

$$R^2OOC\text{-}R^1\text{-}COOR^2 \qquad II$$

in welcher $R^1$ ein aliphatischer, cycloaliphatischer, aromatischer, araliphatischer Kohlenwasserstoffrest mit 4-12 C-Atomen und $R^2$ Wasserstoff oder ein Alkylrest mit 1-8 C-Atomen sein kann
in an sich bekannter Weise bei Temperaturen zwischen 200 und 300°C.

2. Verfahren zur Herstellung von Polyesteramiden gemäss Anspruch 1, dadurch gekennzeichnet, dass das Äquivalenzverhältnis der Summe der Aminkomponenten B) und C) zu dem Diglykolamin® D) zwischen 0,3 : 0,7 bis 0,9 : 0,1 liegt und die Summe der Amin- und Hydroxyläquivalente den Carboxyläquivalenten entspricht.

3. Verfahren zur Herstellung von Polyesteramiden gemäss Anspruch 2, dadurch gekennzeichnet, dass das Äquivalenzverhältnis der Komponente B) zu der Komponente C) bei einem Diglykolaminanteil von 0,7 Äquivalenten zwischen 0,05 : 0,25 und 0,25 zu 0,05 und bei einem Diglykolaminanteil von 0,1 Äquivalenten zwischen 0,1 : 0,8 und 0,8 : 0,1 liegt.

4. Verwendung der Polyesteramide gemäss den Ansprüchen 1 bis 3, gegebenenfalls mit üblichen Zusatzstoffen und Füllstoffen, als Vergussmassen.

5. Verwendung der Polyesteramide gemäss den Ansprüchen 1 bis 3, gegebenenfalls mit üblichen Zusatzstoffen und Füllstoffen, zur Verklebung von organischen und anorganischen Substraten untereinander oder miteinander.

6. Mischungen der Polyesteramide gemäss den Ansprüchen 1 bis 3 mit Äthylen-Vinylacetat-Copolymeren sowie gegebenenfalls üblichen Zusatzstoffen und Füllstoffen.

7. Verwendung der Mischungen gemäss Anspruch 6 zur Verklebung von organischen oder anorganischen Substraten miteinander oder untereinander.

8. Verwendung der Mischungen gemäss Anspruch 6 als Vergussmassen.

**Claims for the Contracting States:**
BE, DE, FR, GB, IT, LU, NL, SE

1. Polyesteramides produced by the condensation of

A) dimerised fatty acids with 16-44 carbon atoms,
B) ethylene diamine,
C) at least one diamine of the general formula I

$$H_2N\text{-}R\text{-}NH_2 \quad I$$

wherein R may be an aliphatic, optionally substituted hydrocarbon residue with 3-36 C-atoms which may be interrupted by heteroatoms, and
D) Diglykolamin® [= 2-(2-aminoethoxy)ethanol], and optionally with
E) at least one of the dicarboxylic acids of the general formula II

$$R^2OOC\text{-}R^1\text{-}COOR^2 \quad II$$

wherein $R^1$ may be an aliphatic, aromatic, araliphatic hydrocarbon residue with 4-12 C-atoms, and $R^2$ may be hydrogen or an alkyl residue with 1-8 C-atoms.

2. Polyesteramides according to claim 1, characterised in that the equivalent ratio of the sum of the amine components B) and C) to the Diglykolamin® D) is between 0.3 : 0.7 to 0.9 : 0.1 and that the sum of the amine and hydroxyl equivalents corresponds to the carboxyl equivalent.

3. Polyesteramides according to claim 2, characterised in that with a Diglykolamin proportion of 0.7 equivalents the equivalent ratio of the component B) to the component C) is between 0.05 : 0.25 and 0.025 : 0.05, and with a Diglykolamin proportion of 0.1 equivalents is between 0.1 : 0.8 and 0.8 : 0.1.

4. Use of the polyesteramides in accordance with claims 1 to 3, optionally with conventional additives and fillers, as casting masses.

5. Use of polyesteramides according to claims 1 to 3, optionally with conventional additives and fillers, for the adhesion of organic and/or inorganic substrates.

6. Mixtures of the polyesteramides according to claims 1 to 3 with ethylene-vinylacetate-copolymers, optionally with conventional additives and fillers.

7. Use of the mixtures according to claim 6 for the adhesion of organic and/or inorganic substrates.

8. Use of the mixtures according to claim 6 as casting masses.

**Claims for the Contracting State:** AT

1. Method for the manufacture of polyesteramides by the condensation of

A) dimerised fatty acids with 16-44 carbon atoms,
B) ethylene diamine,
C) at least one diamine of the general formula I

$$H_2N\text{-}R\text{-}NH_2 \quad I$$

wherein R may be an aliphatic, optionally substituted hydrocarbon residue with 3-36 C-atoms which may be interrupted by heteroatoms, and
D) Diglykolamin® [= 2-(2-aminoethoxy)ethanol], and optionally with
E) at least one of the dicarboxylic acids of the general formula II

$$R^2OOC\text{-}R^1\text{-}COOR^2 \quad II$$

wherein $R^1$ may be an aliphatic, aromatic, araliphatic hydrocarbon residue with 4-12 C-atoms, and $R^2$ may be hydrogen or an alkyl residue with 1-8 C-atoms

by a generally known method at temperatures between 200 and 300°C.

2. Method for the manufacture of polyesteramides according to claim 1, characterised in that the equivalent ratio of the sum of the amine components B) and C) to the Diglykolamin® D) is between 0.3 to 0.7 to 0.9 : 0.1 and that the sum of amine and hydroxyl equivalents corresponds to the carboxyl equivalent.

3. Method for the manufacture of polyesteramides according to claim 2, characterised in that with a Diglykolamin proportion of 0.7 equivalents the equivalent ratio of the component B) to the component C) is between 0.05 : 0.25 and 0.25 : 0.05, and with a Diglykolamin proportion of 0.1 equivalents is between 0.1 : 0.8 and 0.8 : 0.1.

4. Use of the polyesteramides in accordance with claims 1 to 3, optionally with conventional additives and fillers, as casting masses.

5. Use of polyesteramides according to claims 1 to 3, optionally with conventional additives and fillers, for the adhesion of organic and/or inorganic substrates.

6. Mixtures of the polyesteramides according to claims 1 to 3 with ethylene-vinylacetate-copolymers, optionally with conventional additives and fillers.

7. Use of the mixtures according to claim 6 for the adhesion of organic and/or inorganic substrates.

8. Use of the mixtures according to claim 6 as casting masses.

**Revendications pour les Etats contractants:**
BE, DE, FR, GB, IT, LU, NL, SE

1. Polyester-amides préparés par condensation:
A) d'acides gras dimérisés contenant de 16 à 44 atomes de carbone avec
B) l'éthylène-diamine et avec
C) au moins une diamine répondant à la formule générale I:

$$H_2N\text{-}R\text{-}NH_2 \quad (I)$$

dans laquelle R peut être un radical hydrocarboné aliphatique contenant de 3 à 36 atomes de carbone, qui est éventuellement substitué et qui peut être interrompu par des hétéroatomes,
D) la Diglycolamine®, c'est à dire l'(amino-2 éthoxy) -2 éthanol), et éventuellement
E) au moins l'un des acides dicarboxyliques répondant à la formule générale II:

$$R^2OOC\text{-}R^1\text{-}COOR^2 \quad (II)$$

dans laquelle $R^1$ peut être un radical hydrocarboné aliphatique, cycloaliphatique, aromatique ou araliphatique contenant de 4 à 12 atomes de car-

bone et $R^2$ l'hydrogène ou un radical alkyle contenant de 1 à 8 atomes de carbone.

2. Polyester-amides selon la revendication 1, caractérisés en ce que le rapport, en équivalents, de la somme des composantes aminées B et C à la Diglycolamine® D est compris entre 0,3 : 0,7 et 0,9 : 0,1, et la somme des équivalents de radicaux amino et hydroxy correspond aux équivalents de radicaux carboxy.

3. Polyester-amides selon la revendication 2, caractérisé en ce que le rapport, en équivalents, de la composante B à la composante C est, pour une teneur en Diglycolamine de 0,7 équivalent, compris entre 0,05 : 0,25 et 0,25 : 0,05, et, pour une teneur en Diglycolamine de 0,1 équivalent, compris entre 0,1 : 0,8 et 0,8 : 0,1.

4. Application des polyester-amides selon l'une quelconque des revendications 1 à 3, avec des additifs et charges usuels, comme matières de scellement.

5. Application des polyester-amides selon l'une quelconque des revendications 1 à 3, éventuellement avec des additifs et charges usuels, pour le collage de supports minéraux ou organiques, avec eux-mêmes ou les uns avec les autres.

6. Mélanges de polyester-amides selon l'une quelconque des revendications 1 à 3 avec des copolymères éthylène/acétate de vinyle et, éventuellement, des additifs et charges usuels.

7. Application de mélanges selon la revendication 6 pour le collage de supports minéraux ou organiques, avec eux-mêmes ou les uns avec les autres.

8. Application de mélanges selon la revendication 6 comme matières de scellement.

**Revendications pour l'Etat contractant:** AT

1. Procédé de préparation de polyester-amides par condensation:

A) d'acides gras dimérisés contenant de 16 à 44 atomes de carbone avec

B) l'éthylène-diamine et avec

C) au moins une diamine répondant à la formule générale I:

$$H_2N\text{-}R\text{-}NH_2 \qquad (I)$$

dans laquelle R peut être un radical hydrocarboné aliphatique contenant de 3 à 36 atomes de carbone, qui est éventuellement substitué et qui peut être interrompu par des hétéroatomes,

D) la Diglycolamine®, c'est à dire l'(amino-2 éthoxy) -2 éthanol), et éventuellement

E) au moins l'un des acides dicarboxyliques répondant à la formule générale II:

$$R^2OOC\text{-}R^1\text{-}COOR^2 \qquad (II)$$

dans laquelle $R^1$ peut être un radical hydrocarboné aliphatique, cycloaliphatique, aromatique ou araliphatique contenant de 4 à 12 atomes de carbone et $R^2$ l'hydrogène ou un radical alkyle contenant de 1 à 8 atomes de carbone,

de manière connue, à des températures comprises entre 200 et 300°C.

2. Procédé de préparation de polyester-amides selon la revendication 1, procédé caractérisé en ce que le rapport, en équivalents, de la somme des composantes aminées B et C à la Diglycolamine® D est compris entre 0,3 : 0,7 et 0,9 : 0,1 et la somme des équivalents de radicaux amino et hydroxy correspond aux équivalents de radicaux carboxy.

3. Procédé de préparation de polyester-amides selon la revendication 2, procédé caractérisé en ce que le rapport, en équivalents, de la composante B à la composante C est, pour une teneur en Diglycolamine® de 0,7 équivalent, compris entre 0,05 : 0,25 et 0,25 : 0,05, et, pour une teneur en Diglycolamine de 0,1 équivalent, compris entre 0,1 : 0,8 et 0,8 : 0,1.

4. Application des polyester-amides selon l'une quelconque des revendications 1 à 3, avec des additifs et charges usuels, comme matières de scellement.

5. Application des polyester-amides selon l'une quelconque des revendications 1 à 3, éventuellement avec des additifs et charges usuels, pour le collage de supports minéraux ou organiques, avec eux-mêmes ou les uns avec les autres.

6. Mélanges de polyester-amides selon l'une quelconque des revendications 1 à 3 avec des copolymères éthylène/acétate de vinyle et, éventuellement, des additifs et charges usuels.

7. Application de mélanges selon la revendication 6 pour le collage de supports minéraux ou organiques, avec eux-mêmes ou les uns avec les autres.

8. Application de mélanges selon la revendication 6 comme matières de scellement.